# EUROPÄISCHE PATENTSCHRIFT

(11) **EP 2 797 382 B1**
(45) Veröffentlichungstag und Bekanntmachung des Hinweises auf die Patenterteilung: **30.03.2016**
(21) Anmeldenummer: 14000238.7
(22) Anmeldetag: 23.01.2014
(51) Int. Cl.: H05B 3/50, B60H 1/22, B65D 43/02, B65D 45/00, F24H 1/00, F24H 1/12, F24H 3/04, F24H 9/02, F24H 9/18

(54) **Wasserheizer und Heizsystem für ein elektrisch zu betreibendes Fahrzeug mit einem Wasserheizer**
Water heater and heating system for an electrical vehicle with a water heater
Chauffe-eau et système de chauffage pour un véhicule électrique avec chauffe-eau

(30) Priorität: 26.04.2013 EP 13002231
(43) Veröffentlichungstag der Anmeldung: 29.10.2014
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 337 425
- EP-A1- 2 428 747
- EP-A2- 2 145 783
- US-A- 1 529 200
- US-A- 3 072 285
- US-B1- 6 269 772

## Beschreibung

Die vorliegende Erfindung betrifft einen Wasserheizer mit einem Rohranschlüsse aufweisenden Gehäuse, welches eine von einem Medium durchströmbare Zirkulationskammer umschließt, in welche wenigstens eine ein elektrisches Heizelement aufnehmende Heizrippe hineinragt. Die vorliegende Erfindung betrifft insbesondere eine elektrische Heizvorrichtung für ein Kraftfahrzeug, speziell für ein elektrisch zu betreibendes Kraftfahrzeug und ein Heizsystem in einem solchen Kraftfahrzeug.

Die vorliegende Erfindung betrifft insbesondere einen Wasserheizer mit den oberbegrifflichen Merkmalen des Anspruchs 1, der aus der US 1 529 200 A bekannt ist.

Ein Wasserheizer ist beispielsweise aus der DE 196 42 442 A1 bekannt. Diese Druckschrift offenbart eine elektrische Heizvorrichtung mit einem Gehäuseunterteil und einem Gehäusedeckel, der unter Zwischenlage eines Dichtelementes an dem Gehäuseunterteil anliegt. Das Gehäuseunterteil und der Gehäusedeckel sind jeweils als Aluminiumbauteile ausgebildet.

Ein weiterer Stand der Technik ist mit der auf die vorliegende Anmelderin zurückgehenden EP 2 440 004 A1 gegeben. Diese Druckschrift offenbart in ihrer Figur 7 zwei identisch ausgebildete Gehäuseteile, die unter Zwischenlage einer Dichtlage miteinander verbunden sind und jeweils eine Zirkulationskammer für ein zu erwärmendes Fluid ausbilden, wobei das Gehäuseunterteil Anschlussstutzen für den Anschluss von Wasser führenden Rohren aufweist.

Die auf die vorliegende Anmelderin zurückgehende EP 2 337 425 A1 betrifft eine elektrische Heizvorrichtung, die als Wasserheizer ausgebildet ist. Die Heizvorrichtung hat ein erstes Gehäuseteil mit Rohranschlüssen und einen Gehäusedeckel der eine Anschlusskammer abdeckt. Zu der stofflichen Beschaffenheit der einzelnen Bauteile ist nichts ausgeführt. Es ist ersichtlich, dass die Ausnehmungen einteilig von einer Trennwand abgehen und in eine Zirkulationskammer hineinragen.

Die US 1 529 200 A betrifft einen Wasserheizer mit einer Vielzahl von Heizrippen, die in ein Gehäuseunterteil hineinragen, welches an gegenüberliegenden Seiten mit Auslaufstutzen versehen ist, um ein flüssiges Medium durch die Heizvorrichtung hindurch zu leiten. Jede einzelne ist mit einem um eine isolierende Platte gewickelten Widerstandsdraht bestückt, der zusammen mit der isolierenden Platte in eine Ausnehmung der Rippe eingebracht ist.

Die EP 2 337 425 A1 nimmt hinsichtlich der konkreten Ausgestaltung der Heizvorrichtung den Offenbarungsgehalt der EP 1 931 176 A1 in sich auf. Diese Druckschrift beschreibt, dass das Gehäuseunterteil des Wasserheizers ein Druckgussteil aus Aluminium ist.

Aus der EP 2 428 747 A1 ist ein Luftheizer mit PTC-Heizelementen bekannt.

Die zuvor beschriebenen und aus dem Stand der Technik bekannten Lösungen zu Wasserheizern lassen noch Wünsche offen. So werden heutzutage insbesondere für Elektrofahrzeuge relativ leistungsfähige elektrische Heizvorrichtungen benötigt. Es besteht einerseits die Notwendigkeit eines kompakten Aufbaus der elektrischen Heizvorrichtung. Die elektrische Heizvorrichtung soll aber nicht nur raumsparend, sondern auch gewichtssparend ausgebildet sein, da insbesondere bei Kraftfahrzeugen das Fahrzeuggewicht einen besonderen Einfluss auf den Kraftstoff- bzw. Stromverbrauch für den Antrieb hat. Des Weiteren wird nach Möglichkeiten gesucht, das Gehäuseunterteil und den dieses verschließenden Deckel möglichst einfach und effektiv zu fügen und die Zirkulationskammer dauerhaft und sicher abzudichten. Bei der Lösung nach der DE 196 42 442 A1 wird der Gehäusedeckel auf das Gehäuseunterteil aufgeschraubt.

Bei dem Wasserheizer nach der DE 196 42 442 A1sind das Gehäuseunterteil und der Gehäusedeckel jeweils aus Metall ausgebildet. Dieser Werkstoff hat zwar den Vorteil einer hohen Wärmeleitfähigkeit, was für die Ausgestaltung der Heizrippe einteilig an dem Gehäusedeckel von Vorteil ist. Allerdings führt auch das Gehäuseunterteil die im Inneren des Wasserheizers erzeugte Wärme relativ gut nach außen ab. Das Wärmereservoir im Inneren des Wasserheizers ist danach schlecht isoliert.

Soweit in der vorliegenden Anmeldung auf Wasser als zu erwärmendes Medium abgestellt wird, bedeutet dies, dass die vorliegende Erfindung insbesondere einen Fluidheizer angeben möchte. Wasser wird in einem Fahrzeug als Temperiermedium üblicherweise mit Zusätzen versetzt, um die korrosive Wirkung zu vermindern bzw. ein Einfrieren bei üblichen Außentemperaturen zu verhindern. So ist ein Wasserheizer im Sinne der vorliegenden Erfindung vor allem ein Fluidheizer, der geeignet ist, Wasser sowie Wassermischungen, insbesondere mit einem recht hohen Glykolanteil von bis zu 50 Gew.% zu erwärmen.

Der vorliegenden Erfindung liegt das Problem zugrunde, einen solchen Heizer anzugeben, der sich besonders kompakt herstellen lässt und einen guten Wirkungsgrad zeigt. Des Weiteren will die vorliegende Erfindung ein Heizsystem für ein elektrisch zu betreibendes Fahrzeug mit kompaktem Aufbau und hohem Wirkungsgrad angeben.

Mit Blick auf die vorrichtungsmäßige Lösung wird mit der vorliegenden Erfindung ein Wasserheizer mit den Merkmalen von Anspruch 1 vorgeschlagen. Der erfindungsgemäße Heizer hat ein wannenförmiges und aus Kunststoff gebildetes Gehäuseunterteil. Das Gehäuseunterteil umschließt im Wesentlichen die Zirkulationskammer. Durch die Ausgestaltung des Gehäuseunterteils aus Kunststoff kann dieses auch bei komplexerer Geometrie sehr kostengünstig und vor allen Dingen relativ gewichtssparend ausgebildet sein. Die Heizrippe ist an einem Gehäusedeckel ausgebildet. Dieser die Zirkulationskammer zumindest einseitig abdeckende und verschließende Gehäusedeckel ist aus einem gut wärmeleitenden Werkstoff geformt, vorzugsweise Kupfer, besonders bevorzugt Aluminium. Auch ein mit gut wärmeleitendem Füllstoff gefüllter Kunststoff ist ein gut wärmeleitender Werkstoff im Sinne der vorliegenden Erfindung. Der Gehäusedeckel eignet sich dementsprechend besonders als Heizungsgehäuse mit der zumindest einen Heizrippe und dem in der Heizrippe und damit dem Heizungsgehäuse aufgenommenen elektrischen Heizelement. Bei dem Heizelement kann es sich um einen Widerstandsheizdraht oder ein PTC-Heizelement handeln.

Bei dem erfindungsgemäßen Wasserheizer sind die unterschiedlichen Funktionen durch unterschiedliche Gehäuseteile ausgeformt. Das in der Regel wannenförmige Gehäuseunterteil dient im Wesentlichen der Definition der Zirkulationskammer. Auf dieses aus Kunststoff und daher sehr leicht ausgebildete Gehäuseteil wird ein üblicherweise aus Aluminium geformter Gehäusedeckel dichtend aufgesetzt, der aufgrund seiner stofflichen Beschaffenheit ohne thermische Schädigung unmittelbar mit dem elektrischen Heizelement des Wasserheizers in Kontakt stehen kann und gut wärmeleitend ausgebildet ist, um die üblicherweise im Inneren der Heizrippe erzeugte Wärme zu der Außenseite der Heizrippe weiterzuleiten, die üblicherweise in die Zirkulationskammer hineinragt und vom dem daran geführten Medium umflossen wird. Der Gehäusedeckel hat dabei vorzugsweise mehrere, sich im Wesentlichen parallel zueinander erstreckende Heizrippen. Diese öffnen sich jeweils vorzugsweise zu einer identischen Seite, die die Anschlussseite des Gehäusedeckels ausbildet. Über diese Anschlussseite erfolgt der elektrische Anschluss und die elektrische Energieversorgung des der jeweiligen Heizrippe zugeordneten elektrischen Heizelementes. Die Heizrippen öffnen sich üblicherweise zu einer Anschlusskammer, die über eine Trennwand von der Zirkulationskammer getrennt ist. Dort sind die unterschiedlichen elektrischen Heizelemente elektrisch an eine Versorgung angeschlossen, üblicherweise gruppiert. Die Gruppierung der Heizelemente zu einzelnen Heizstufen kann in der in EP 2 440 004 A1 beschriebenen Weise insbesondere über eine Leiterplatte erfolgen. Die Offenbarung der EP 2 440 004 A1 der vorliegenden Anmelderin wird durch Bezugnahme in den Offenbarungsgehalt dieser Anmeldung einbezogen.

Es versteht sich von selbst, dass zwischen dem Gehäusedeckel und dem Gehäuseunterteil üblicherweise zumindest ein Dichtelement vorgesehen ist, über welches die beiden Gehäuseteile gegeneinander abgedichtet sind. Eine solche Ausgestaltung wird jedenfalls dann gewählt, wenn die beiden Gehäuseteile nicht stoffschlüssig miteinander verbunden, beispielsweise verklebt oder verschweißt werden. Aber auch eine solche Klebe- bzw. Schweißverbindung ist für die Verbindung und Abdichtung der beiden Gehäuseteile des erfindungsgemäßen Wasserheizers denkbar.

Gemäß einer bevorzugten Weiterbildung der vorliegenden Erfindung ist die Heizrippe mit zumindest einer U-förmigen Ausnehmung versehen. Diese öffnet sich zu der bereits beschriebenen und von der Zirkulationskammer getrennten Anschlusskammer. Die U-förmige Ausnehmung nimmt nach der hier diskutierten bevorzugten Weiterbildung ein PTC-Heizelement in sich auf, welches in wärmeleitendem Kontakt an gegenüberliegenden Innenseiten der U-förmigen Ausnehmung anliegt. Diese Weiterbildung kann von einer Ausgestaltung und Anordnung des PTC-Heizelementes in der U-förmigen Ausnehmung Gebrauch machen, wie sie in EP 1 872 986 A1 bzw. EP 2 440 004 A1 der vorliegenden Anmelderin beschrieben ist. Insbesondere PTC-Heizelemente mit einem keilförmig ausgeformten Gehäuse und/oder einem verschieblich daran vorgesehenen Keilelement zum Verklemmen des PTC-Heizelementes in der Ausnehmung sind zu bevorzugen.

Die Anschlusskammer ist vorzugsweise mit einem die Trennwand überragenden Rand versehen. Die Trennwand und der Rand sind üblicherweise einteilig an dem Gehäusedeckel ausgeformt und vorzugsweise aus einem metallischen Werkstoff oder aus Kunststoff, insbesondere mit einem Füllstoffanteil, mit guter Wärmeleitfähigkeit gebildet. Es handelt sich dabei vorzugsweise um ein Druckguss- bzw. Kunststoffteil. Der umlaufende Rand überragt die Trennwand üblicherweise auf der der Heizrippe abgewandten Seite. Durch Aufbringen eines Anschlusskammerdeckels aus Metall wird im Falle eines auch elektronisch leitenden Werkstoffs, der den Rand ausbildet, die Anschlusskammer nach außen abgeschirmt. Im Falle eines elektrisch leitenden umlaufenden Randes erfolgt die metallische Verbindung zu dem Anschlusskammerdeckel üblicherweise durch Verkrallen beim Einsetzen des Anschlusskammerdeckels. Dieser verkrallt sich üblicherweise mit seinem Außenumfang innen mit dem umlaufenden Rand. Dadurch wird eine umfängliche Abschirmung geschaffen, die auf der einen Seite durch den Anschlusskammerdeckel und auf der anderen Seite im Wesentlichen durch die Trennwand geformt ist, wobei der dazwischen gebildete Freiraum für den Anschluss der einzelnen Heizelemente des Wasserheizers durch den umlaufenden Rand umgeben und damit umfänglich abgeschirmt ist.

Mit Blick auf eine möglichst einfache und innerhalb von Toleranzgrenzen jeweils sicher verwirklichte und abgedichtete Verbindung der beiden Gehäuseteile wird gemäß einer bevorzugten Weiterbildung der vorliegenden Erfindung vorgeschlagen, das Gehäuseunterteil über eine das zuvor bereits erwähnte Dichtelement formschlüssig unter Vorspannung haltende Formschlussverbindung mit dem Gehäusedeckel zu verbinden. Dabei können die die Formschlussverbindung bewirkenden Flächen an dem Gehäuseunterteil bzw. dem Gehäusedeckel bereits bei der Herstellung der beiden Elemente verwirklicht und mit der geforderten Genauigkeit an den jeweiligen Gehäuseteilen vorgesehen sein. Rast- bzw. andere Formschlussverbindungen lassen sich durch angemessene Toleranzgrenzen für die Abmessungen von Gehäuseunterteil und Gehäusedeckel so herstellen, dass die gewünschte Formschlussverbindung und die hier zusammenwirkenden Flächen von Gehäuseunterteil und Gehäusedeckel in vorbestimmter Weise zueinander beabstandet sind bzw. miteinander wirken. Hierdurch kann die auf das Dichtelement wirkende Klemmkraft vorherbestimmt eingestellt werden. Im Gegensatz zu Schraubverbindungen ist das Risiko einer fehlerhaften Montage durch zu geringen Anpressdruck oder einem übermäßigen Anpressdruck beim Verbinden von Gehäuseunterteil und Gehäusedeckel danach ausgeschlossen. Montagefehler können bei der bevorzugten Ausgestaltung üblicherweise nicht zu Dichtigkeitsproblemen an der Fügestelle zwischen Gehäuseunterteil und Gehäusedeckel führen.

Die Formschlussverbindung erfolgt vorzugsweise durch ein längliches, das Gehäuseunterteil und den Gehäusedeckel formschlüssig miteinander verbindendes Formschlusselement.

Das Formschlusselement ist zwischen einander gegenüberliegenden Anlageflächen für das Formschlusselement von Gehäuseunterteil und Gehäuseoberteil vorgesehen. Es kann die besagten Anlageflächen von Gehäuseunterteil und Gehäuseoberteil ein- oder beidseitig überragen, d.h. die entsprechenden Anlageflächen einrahmen und in sich aufnehmen. Es kann aber alternativ auch ebenso gut lediglich ausschließlich zwischen den einander gegenüberliegenden Anlageflächen von Gehäuseunterteil und Gehäusedeckel vorgesehen sein.

Das Formschlusselement liegt ferner an den Anlageflächen unter einer Vorspannkraft an. Diese Vorspannkraft ist durch die Kompression des Dichtelementes bewirkt. Dementsprechend hält das Formschlusselement nicht lediglich die beiden Gehäuseteile, d.h. Gehäuseunterteil und Gehäusedeckel zusammen und legt diese relativ zueinander formschlüssig fest. Das Formschlusselement bewirkt vielmehr auch eine Gegenkraft, die der gewünschten Expansion des Dichtelementes entgegenwirkt und dieses komprimiert hält, so dass die beiden Gehäuseteile unter Zwischenlage des komprimierten Dichtelementes versiegelt gegeneinander festgelegt sind. Dabei wird durch angemessene Anpassung des Formschlusselementes einerseits sowie der Anlageflächen von Gehäuseunterteil und Gehäusedeckel andererseits sowie des Weiteren durch die angemessene Dimensionierung des Dichtelementes dafür Sorge getragen, dass etwaige Fertigungsschwankungen durch unterschiedliche Kompression des Dichtelementes ausgeglichen werden können, ohne das zu befürchten ist, dass die Versiegelung des Gehäuses verloren geht. Versiegelt ist hierbei insbesondere eine zumindest von dem Gehäuseunterteil umgebene Kammer zur Aufnahme beispielsweise des Fluids oder der elektronischen Bauteile.

Das längliche Formschlusselement und damit die gegenüberliegenden Anlageflächen erstreckt sich dabei üblicherweise parallel zu einer Fuge, die zwischen dem Gehäuseunterteil und dem Gehäusedeckel gebildet ist und welche durch das Dichtelement abgedichtet wird. Das Dichtelement läuft dabei in Umfangsrichtung umfänglich und geschlossen um, so dass die durch das Gehäuseunterteil umgebene Kammer gegenüber der Umgebung abgedichtet ist. Das längliche Formschlusselement erstreckt sich dabei üblicherweise lediglich entlang einer einzigen, üblicherweise geradlinig verlaufenden Längswand des Gehäuses. Das längliche Formschlusselement hat dementsprechend vorzugsweise eine geradlinige Ausgestaltung, d.h. verläuft parallel zu der zugeordneten Seitenwand.

Zur Versiegelung des Gehäuses reicht ein einziges längliches Formschlusselement aus. Dieses hat üblicherweise in etwa die Erstreckung entsprechend der Länge der zugeordneten Seitenwand des Gehäuses. An der gegenüberliegenden Seitenwand des Gehäuses kann der Gehäusedeckel mit dem Gehäuseunterteil beispielsweise durch ein Scharnier verbunden sein. Denkbar sind auch Rastverbindungen üblicher Art, durch welcher das Gehäuseunterteil und der Gehäusedeckel an der dem Formschlusselement gegenüberliegenden Seite verbunden sind. Diese Rastverbindungen sollten so ausgestaltet sein, dass eine gewisse Verschwenkbewegung zwischen dem Gehäuseunterteil und dem Gehäusedeckel um die Rastverbindung möglich ist.

Das längliche Formschlusselement kann durch einen einfachen Stab, insbesondere einen Zylinderstab gebildet sein. Auf die Querschnittsform des im Wesentlichen zylindrischen Formschlusselementes kommt es nicht so sehr an. Wesentlich ist eine Anpassung des länglichen Formschlusselementes an die Oberflächengestaltung der Anlagefläche.

Das längliche Formschlusselement wird durch die Vorspannkraft des Dichtelementes zwischen den Anlageflächen kraft- bzw. reibschlüssig gehalten. Die hierbei auf das längliche Formschlusselement wirkende Reibkraft verhindert üblicherweise eine Gleitbewegung des länglichen Formschlusselementes in seiner Längsrichtung.

Allerdings werden mit Blick auf die im Fahrzeug herrschenden Vibrationen weitere Maßnahmen vorgeschlagen, die Handhabung des versiegelten Gehäuses beim Schließen und einen dauerhaften Verschluss des versiegelten Gehäuses mit dem Formschlusselement verbessern.

So ist das längliche Formschlusselement vorzugsweise durch sich quer zu dem länglichen Formschlusselement erstreckende Halteflächen formschlüssig gehalten. Diese Halteflächen ragen von den Anlageflächen des Gehäuseunterteils bzw. des Gehäusedeckels ab und befinden sich üblicherweise an der Außenseite des länglichen Formschlusselementes. Dementsprechend wird das längliche Formschlusselement durch die Halteflächen zwischen der Außenwand des Gehäuses und den Halteflächen formschlüssig gehalten.

Die Halteflächen zu dem an dem Gehäuseunterteil vorgesehenen Anlageflächen ragen üblicherweise von dem Gehäuseunterteil in Richtung auf den Gehäusedeckel ab. In entsprechender Weise ragen alternativ oder ergänzend an dem Gehäusedeckel vorgesehene Halteflächen von den zugeordneten Anlageflächen in Richtung auf das Gehäuseunterteil ab. Damit ist eine formschlüssige Aufnahme des länglichen Formschlusselementes in einer Richtung quer zur Längserstreckung desselben bewirkt. Das längliche Formschlusselement ist dementsprechend zwischen den Halteflächen und der Gehäusewand formschlüssig festgelegt.

Der Gehäusedeckel ist vorzugsweise aus einem gut wärmeleitfähigen Material, insbesondere einem Metall und besonders bevorzugt mittels Druckguss hergestellt. Sofern ein solches Gehäuseunterteil aus Kunststoff mit einem Gehäusedeckel aus Aluminium kombiniert und verschlossen wird, ergibt sich ein relativ leichter Aufbau der sich besonders gut für ein gewichtssparendes Gehäuse des Wasserheizers in einem Kraftfahrzeug eignet.

Gemäß einer bevorzugten Weiterbildung der vorliegenden Erfindung ist das Formschlusselement in seiner Längsrichtung formschlüssig gehalten. Hierzu kann nach dem Einführen des Formschlusselementes durch Verschieben in seiner Längsrichtung vor- und/oder hinter dem länglichen Formschlusselement, d.h. in seiner axialen Verlängerung ein Vorsprung vorgesehen sein oder auch angeordnet werden. Dieser Vorsprung kann durch das Gehäuseunterteil bzw. den Gehäusedeckel ausgebildet werden. Denkbar ist auch die Ausgestaltung durch ein weiteres Bauteil des versiegelten Gehäuses, beispielsweise durch Außenflächen eines Steuergehäuses, welches mit dem Gehäuseunterteil und/oder dem Gehäusedeckel verbunden ist und Steuerkomponenten in sich aufnimmt, die auf in oder auf dem versiegelten Gehäuse vorgesehene Einrichtungen einwirken. Die formschlüssige Halterung kann aber auch durch einen Vorsprung, eine Ausnehmung oder eine Nocke an dem länglichen Formschlusselement gebildet sein, die mit einer Anlagefläche oder einer der Anlagefläche zugeordneten Ausnehmung zusammenwirkt, um das längliche Formschlusselement in Längsrichtung formschlüssig festzulegen.

Gemäß einer bevorzugten Weiterbildung der vorliegenden Erfindung haben das Gehäuseunterteil und der Gehäusedeckel ineinander greifende Befestigungsabschnitte. Diese Befestigungsabschnitte sind in Erstreckungsrichtung des Formschlusselementes alternierend und hintereinander vorgesehen. Dementsprechend wechseln sich Befestigungsabschnitte des Gehäuseunterteils mit Befestigungsabschnitten des Gehäusedeckels ab. Die Befestigungsabschnitte der unterschiedlichen Gehäuseteile verzahnen sich dementsprechend in Erstreckungsrichtung des Formschlusselementes. Diese Befestigungsabschnitte bilden die Anlageflächen aus. Dabei erfolgt die Ausbildung derart, dass die durch das Gehäuseunterteil gebildete Anlagefläche eine durch den Gehäusedeckel gebildete und an dem Befestigungsabschnitt des Gehäusedeckels vorgesehene Anlagefläche überragt. Bei dieser Anschauung wird davon ausgegangen, dass das Gehäuse auf einer durch das Gehäuseunterteil gebildeten Stellfläche steht und der Gehäusedeckel das Gehäuseoberteil oberseitig abdeckt.

Wie bereits vorerwähnt, befindet sich das Formschlusselement üblicherweise an der Außenseite des Gehäuses unmittelbar benachbart zu dessen Außenwand. Hierzu ragen von den Befestigungsabschnitten vorzugweise Befestigungsköpfe ab, die die Anlageflächen ausbilden. Diese Befestigungsköpfe überragen die Außenfläche des üblicherweise glatten und ebenen Gehäuses.

Mit Blick auf eine gewünschte formschlüssige Halterung des länglichen Formschlusselementes in einer Richtung quer zu seiner Erstreckungsrichtung sind die Befestigungsköpfe von Gehäuseunterteil und/oder Gehäusedeckel dabei hakenförmig ausgebildet. Der an dem Gehäuseunterteil vorgesehene Befestigungskopf hat dadurch einen die Anlagefläche überragenden und in Richtung auf das Gehäuseunterteil vorspringenden Verriegelungszapfen. Der an dem Gehäusedeckel zusätzlich oder alternativ vorgesehene Befestigungskopf hat einen die Anlagefläche dieses Verriegelungszapfens überragenden und in Richtung auf den Gehäusedeckel vorspringenden Verriegelungszapfen. Durch die Verriegelungszapfen ist eine Anlagefläche gebildet, die das längliche Verriegelungselement auf seiner dem Gehäuse abgewandten Seite übergreift. So wird durch die Befestigungsköpfe das längliche Verriegelungselement formschlüssig zwischen der Gehäusewandung und dem Verriegelungszapfen geklemmt und die Verriegelungszapfen bilden dabei auf ihrer dem Formschlusselement zugewandten Seite die zuvor beschriebenen Halteflächen aus.

Wie zuvor bereits erwähnt, erstreckt sich das bevorzugt vorgesehene längliche Formschlusselement vorzugsweise parallel zu der Außenfläche des Gehäuses. Das längliche Formschlusselement liegt besonders bevorzugt an der Außenfläche des Gehäuses an.

Mit Blick auf eine einfache Montage und sichere Aufnahme der Anschlüsse zu den einzelnen elektrischen Heizelementen wird gemäß einer bevorzugten Weiterbildung der vorliegenden Erfindung vorgeschlagen, den Gehäusedeckel mit einem die Anschlusskammer umfänglich umgebenden Rand auszubilden. Auf diesen Rand ist ein Anschlusskammer-Deckel aufgelegt. Der Anschlusskammer-Deckel ist vorzugsweise mit dem Gehäusedeckel formschlüssig, beispielsweise über eine Rastverbindung, verbunden.

Das Gehäuse des erfindungsgemäßen Wasserheizers kann vorzugsweise einfach und ohne die Verwendung von Schrauben versiegelt werden. Durch angepasste Ausgestaltung der Anlageflächen und des Formschlusselementes kann denkbaren Fertigungstoleranzen Rechnung getragen werden. Wird innerhalb der vorbestimmten Fertigungstoleranzen bei der Herstellung der einzelnen Komponenten gearbeitet, was bei der Herstellung der Komponenten dokumentiert werden kann, so geben die hierdurch gebildeten definierten Formschlussverbindungen innerhalb der gegebenen Toleranzen zwingend vor, die die vorbestimmte Dichtigkeit erfüllt ohne dass es zu Montagefehlern durch beispielsweise übermäßiges oder zu geringes Anziehen von Befestigungselementen wie Schrauben oder dergleichen kommen kann. Der erfindungsgemäße Wasserheizer kommt vorzugsweise ohne jegliche Schrauben zum Verbinden von Gehäuseunterteil und Gehäusedeckel bzw. Gehäuseunterteil, Gehäusedeckel und Anschlusskammer-Deckel aus. Ohne Schrauben kann auch beispielsweise ein Steuergehäuse mit dem Gehäuseunterteil bzw. dem Gehäusedeckel verbunden sein. Es entfallen damit sämtliche Schraubverbindungen, die die Gefahr mit sich bringen, bei fehlerhafter Montage zu versagen bzw. zerstört zu werden oder sich aufgrund der Vibrationen in dem Kraftfahrzeug lösen.

Das Gehäuse des Wasserheizers besteht ganz oder teilweise aus leichtem und kostengünstig herzustellenden Kunststoff. Sofern das Gehäuse wärmebeaufschlagte Teile hat, können mit der Formschlussverbindung auf einfache Weise Gehäuseteile unterschiedlicher stofflicher Beschaffenheit gefügt und fluiddicht miteinander verbunden werden, auch dann, wenn in dem versiegelten Gehäuse ein erheblicher Innendruck herrscht. Das erfindungsgemäße Gehäuse ist auch dann dicht, wenn ein Innendruck von bis zu 3 bar, bevorzugt von bis zu 5 bar herrscht. Diese Dichtigkeit wird üblicherweise in dem erfindungsgemäßen versiegelten Gehäuse bewirkt ohne dass Schrauben oder andere, manuell oder maschinell anzuziehende Befestigungsmittel zum Einsatz kommen. Das versiegelte Gehäuse hat üblicherweise überhaupt keine Schrauben. Sämtliche Verbindungen jedenfalls zwischen dem Gehäuseunterteil und dem Gehäusedeckel werden üblicherweise mittels Formschluss hergestellt und gehalten. Auch die übrigen Verbindungen an dem versiegelten Gehäuse sind vorzugsweise ausschließlich als Formschlusselemente ausgeformt.

Zur Lösung des zuvor beschriebenen Problems in Bezug auf das Heizsystems wird mit der vorliegenden Erfindung ein solches Heizsystem mit den Merkmalen von Anspruch 15 vorgeschlagen. Dieses Heizsystem ist für ein elektrisch zu betreibendes Fahrzeug verwirklicht. Bei diesem elektrisch betriebenen Fahrzeug kann es sich um ein elektrisch betriebenes Fahrzeug handeln oder aber um ein Hybridfahrzeug, welches sowohl in bekannter Weise über einen Verbrennungsmotor als auch über einen elektrischen Antriebsmotor angetrieben werden kann. Neben einem solchen Antriebsmotor und einer den Antriebsmotor speisenden Batterie hat das Heizsystem einen Wärmetauscher zum Tauschen von Wärme zwischen der Batterie und einem Flüssigkeitskreislauf. Der Flüssigkeitskreislauf umfasst als eine Komponente den zuvor spezifizierten Wasserheizer. Bei der Batterie handelt es sich insbesondere um eine Lithium-Ionen-Batterie, für deren Leistung die tatsächliche Betriebstemperatur entscheidend ist. Die Batterietemperatur sollte idealerweise zwischen 15 und 30 °C liegen. Außerhalb dieses Bereichs nimmt die Leistungsfähigkeit der Batterie deutlich ab. So ist bei dem beschriebenen Heizsystem der Wasserheizer vorgesehen, um die Batterie innerhalb des Heizsystems auf die notwendige Betriebstemperatur zu bringen, sofern die Außentemperatur unter den zuvor beschriebenen bevorzugten Temperaturbereich für die Batterietemperatur fällt. Als Teil des Heizsystem kann vorzugsweise auch ein Kühler vorgesehen sein, der oberhalb des bevorzugten Temperaturbereiches für die Batterietemperatur das Fluid in dem Flüssigkeitskreislauf kühlt und der Batterie über den Wärmetauscher Wärme entzieht. Das Heizsystem ist daher ein Temperiersystem, mit dem sich die Batterie auf den bevorzugten Temperaturbereich von zwischen 15 und 30 °C temperieren lässt. Das System hat üblicherweise auch eine Pumpe, mit der die Flüssigkeit in dem Flüssigkeitskreislauf zirkulieren kann und hierbei einerseits durch den Wasserheizer und/oder den Kühler und andererseits durch den Wärmetauscher geleitet wird.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Figur 1: eine perspektivische Seitenansicht eines ersten Ausführungsbeispiels einer elektrischen Heizvorrichtung ;
- Figur 2: ein vergrößertes Detail in perspektivischer Seitenansicht des in Figur 1 gezeigten Ausführungsbeispiels;
- Figur 3: eine Querschnittsansicht des in den Figuren 1 und 2 gezeigte Ausführungsbeispiel;
- Figur 4: eine Längsschnittansicht des ersten Ausführungsbeispiels mit einem aufgesetzten Steuergehäuse;
- Figur 5: eine Ansicht gemäß Figur 1 eines zweiten Ausführungsbeispiels einer elektrischen Heizvorrichtung; und
- Figur 6: eine Längsschnittansicht eines Gehäuseunterteils eines dritten Ausführungsbeispiels einer elektrischen Heizvorrichtung.

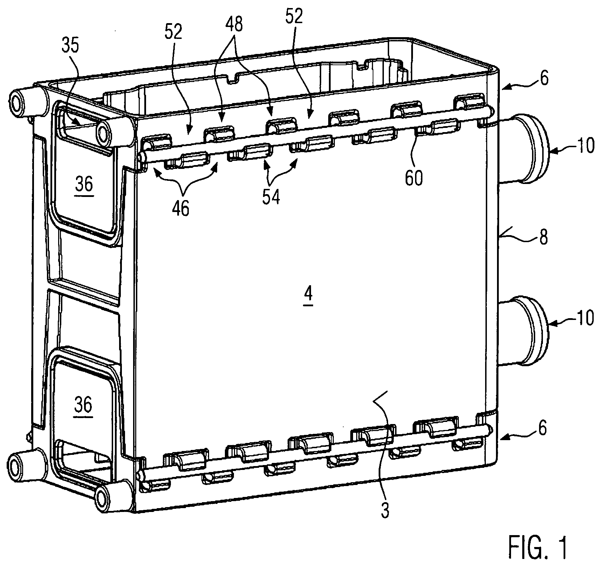

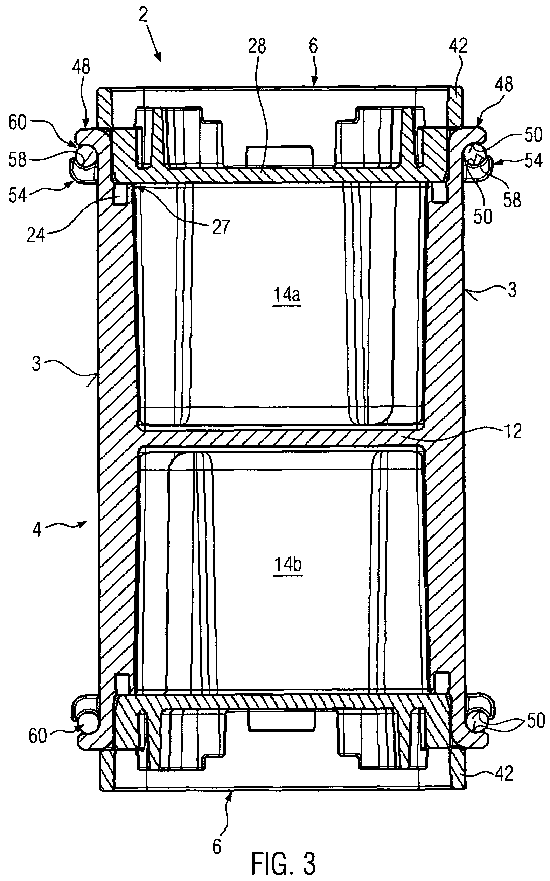

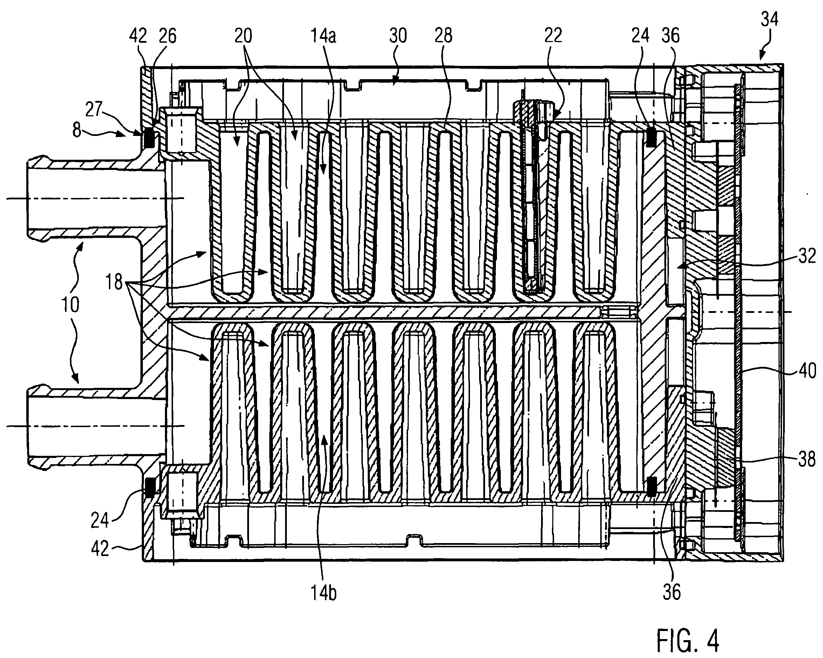

Die Figur 1 zeigt eine perspektivische Ansicht eines versiegelten Gehäuses 2 mit einer ebenen, geradlinig verlaufenden Außenwand 3, welches vorliegend dreiteilig mit einem Gehäuseunterteil 4 und zwei einander gegenüberliegenden Gehäusedeckeln 6 ausgebildet ist. Die Gehäusedeckel 6 sind jeweils identisch ausgeformt und als Aluminium-Druckgussbauteile hergestellt. Das Gehäuseunterteil 4 ist ein spritzgegossenes Kunststoffbauteil, dessen erste Stirnseite 8 von zwei sich parallel erstreckenden Anschlussstutzen 10 überragt ist. Wie insbesondere aus Figuren 3 und 4 ersichtlich, bildet das Gehäuseunterteil 4 diese Anschlussstutzen 10 einteilig und einteilig auch eine mittige Trennwand 12 aus, die zwei Zirkulationskammern 14a, 14b voneinander trennt, die über einen Strömungsdurchgang 16, der in der Trennwand ausgespart ist, miteinander kommunizieren, so dass eine Strömung von dem einen Anschlussstutzen 10 durch die zugeordnete Zirkulationskammer 14a, durch den Strömungsdurchgang 16 und die andere Zirkulationskammer 14b möglich ist, die durch den anderen Anschlussstutzen 10 aus dem Gehäuse 2 herausgeleitet wird.

Der Gehäusedeckel 6 ist bei dem gezeigten Ausführungsbeispiel nicht nur als Abdeckung für die Zirkulationskammer 14a, 14b vorgesehen. Vielmehr bildet der Gehäusedeckel 6 auch Heizrippen 18 mit jeweils U-förmigen Ausnehmungen 20 aus. In diese U-förmigen Ausnehmungen 20 sind elektrische Heizelemente eingesetzt. In Figur 4 ist ein PTC-Heizelement 22 dargestellt, welches in der EP 1 872 986 A1 bzw. der EP 1 921 896 A1 beschriebenen Weise ausgestaltet und in der beispielsweise in EP 2 440 004 A1 beschriebenen Weise in der U-förmigen Ausnehmung 20 aufgenommen ist. Bezüglich der konkreten Ausgestaltung des PTC-Heizelementes 22 und der Anordnung innerhalb der U-förmigen Ausnehmungen 20 wird auf die Offenbarung der zuvor genannten Offenlegungsschriften der vorliegenden Anmelderin verwiesen, deren Offenbarungsgehalt insofern in die Offenbarung der vorliegenden Anmeldung durch Bezugnahme aufgenommen wird.

Wie ferner die Schnittdarstellungen nach den Figuren 3 und 4 erkennen lassen, liegt der Gehäusedeckel 6 unter Zwischenlage eines Dichtelementes 24 an dem Gehäuseunterteil 4 an. Das Dichtelement 24 ist in einer an dem Gehäuseunterteil 4 ausgesparten Nut 26 eingebracht und dort gehalten. Das Dichtelement 24 überragt eine stirnseitige Endfläche des Gehäuseunterteils 4, auf welche der Gehäusedeckel 6 unter Ausbildung einer Fuge 27 aufgesetzt wird.

Der Gehäusedeckel 6 weist neben den U-förmigen Ausnehmungen 22 eine Trennwand 28 auf, welche die zugeordnete Zirkulationskammer 14 von einer im Wesentlichen von dem Gehäusedeckel 6 umgebenen Anschlusskammer 30 trennt. In dieser Anschlusskammer 30 werden die PTC-Heizelemente 22 in der in EP 2 440 004 A1 beschriebenen Weise mit einer nicht gezeigten Leiterplatte kontaktiert, deren Leiterbahnen bis zu der zweiten Stirnseite 32 und durch eine an der zweiten Stirnseite 32 vorgesehene Öffnung 35 in ein dort vorgesehenes Steuergehäuse 34 geführt sind, wie dies in der EP 2 440 004 A1 bzw. der EP 1 872 986 A1 der vorliegenden Anmelderin beschrieben ist. Deren Offenbarungsgehalt ist insofern dem Offenbarungsgehalt der vorliegenden Anmeldung durch Bezugnahme zuzurechnen.

Wie insbesondere Figur 4 verdeutlicht, hat der Gehäusedeckel 6 einen Anlageschenkel 36, der einteilig an dem Gehäusedeckel 6 ausgeformt ist und der an der zweiten Stirnseite 32 des Gehäuseunterteils 4 freiliegt (vgl. Figuren 1 und 4). Dieser Anlageschenkel 36, der wärmeleitend mit den Heizrippen 18 innerhalb des Gehäuseunterteils 4 verbunden ist, dient als Wärmesenke und Anlagefläche zur Ableitung von Verlustleistung von Leistungstransistoren 38, die innerhalb des Steuergehäuses 34 vorgesehen und an einer Unterseite einer Leiterplatte 40 in einer Weise befestigt und gegen den Anlageschenkel 36 angelegt sind, wie dies im Einzelnen in EP 2 440 004 A1 beschrieben ist. Auch insofern ist der Offenbarungsgehalt der EP 2 440 004 A1 dem Offenbarungsgehalt der vorliegenden Patentbeschreibung hinzuzurechnen.

Der Anlageschenkel 36 liegt an der zweiten Stirnseite 32 frei, d.h. übergreift das Gehäuseunterteil 4 außenseitig und bildet aufgrund der einteiligen Ausgestaltung mit den Heizrippen 18, die von dem in der Zirkulationskammer 14 aufgenommenen Fluid umströmt werden, die Wärmesenke aus.

Der Gehäusedeckel 6 hat einen umlaufenden Rand 42, auf den ein nicht dargestellter metallischer Anschlussdeckel aufclipsbar ist.

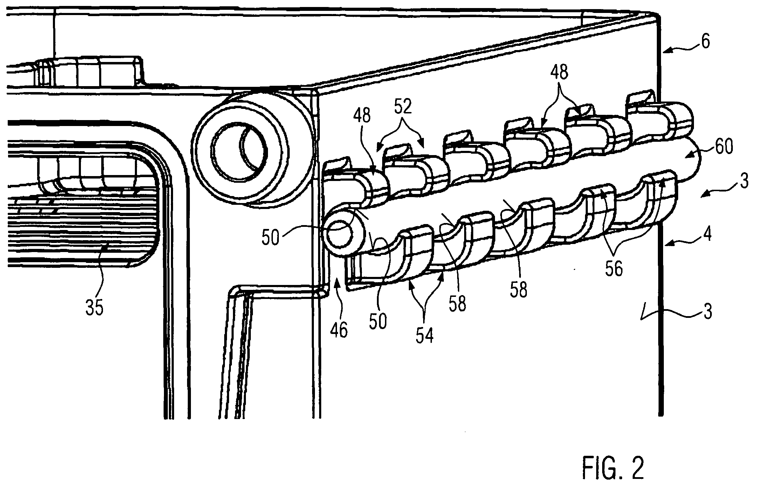

Die fluiddichte Abdeckung des Gehäuseunterteils 4 ergibt sich insbesondere aus den Figuren 1 und 2. Wie aus diesen beiden Figuren ersichtlich, hat das Gehäuseunterteil 4 mehrere mit Abstand zueinander vorgesehene Befestigungsabschnitte 46, die an der Außenwand 3, d.h. Längsseite des Gehäuses 2 zunächst in der Ebene dieser Außenwand 3 vorgesehen sind. Die Befestigungsabschnitte 46 weisen Befestigungsköpfe 48 auf, die die Außenwand 3 überragen und eine sich im Wesentlichen rechtwinklig zu der Außenwand 3 erstreckende Anlagefläche 50 ausbilden.

Auch der Gehäusedeckel 6 hat Befestigungsabschnitte 52, die mit Abstand zueinander vorgesehen sind, derart, dass die Befestigungselemente 46 des Gehäuseunterteils 4 zwischen benachbarte Befestigungsabschnitte 52 des Gehäusedeckels 6 ragen können. Die Befestigungsabschnitte 52 des Gehäusedeckels 6 weisen hakenförmige Befestigungsköpfe 54 auf, die - wie die Befestigungsköpfe 48 des Gehäuseunterteils 4 - Anlageflächen 50 ausformen. Aufgrund der hakenförmigen Ausgestaltung der Befestigungsköpfe 54 bilden diese die Anlageflächen 50 in Richtung auf den Gehäusedeckel 6 vorspringende Verriegelungszapfen 56 aus. Jeder Verriegelungszapfen 56 formt eine Haltefläche 58 aus. Zwischen den einander gegenüberliegenden Anlageflächen 50 des Gehäusedeckels 6 einerseits und des Gehäuseunterteils 4 andererseits ist ein stabförmiges, d.h. zylindrisches und längliches Formschlusselement 60 angeordnet.

Zur Montage des in den Figuren 1 bis 4 gezeigten Ausführungsbeispiels werden zunächst die beiden Gehäuseteile 4, 6 als separate Bauteile hergestellt. Danach wird in die Nut 26 das Dichtelement 24 eingesetzt. Der Gehäusedeckel 6 wird nunmehr auf das Gehäuseunterteil 4 aufgesetzt. Danach wird durch eine äußere Kraft das Dichtelement 24 komprimiert, d.h. die beiden Gehäuseelemente 4, 6 werden gegeneinander gedrückt unter Kompression des Dichtelementes 24. Durch diese Kompression werden die Anlageflächen 50 des Gehäusedeckels 6 einerseits und die Anlageflächen 50 des Gehäuseunterteils 4 andererseits maximal voneinander entfernt. Dann wird das längliche Formschlusselement 60 entlang seiner Längserstreckungsrichtung, d.h. Haupterstreckungsrichtung und damit parallel zu der Außenwand 3 zwischen die Befestigungsköpfe 48, 54 geführt, bis die in den Figuren 1 und 2 gezeigte Endlage erreicht ist. Danach wird die äußere Kraft von dem Gehäuseunterteil bzw. dem Gehäusedeckel entlastet, so dass beide Teile sich aufgrund der entspannenden Kompression des Dichtelementes 24 geringfügig voneinander entfernen, und sich die in Kraftwirkungsrichtung gegenüberliegenden Anlageflächen 50 annähern bis die beiderseitigen Anlageflächen 50 zur Anlage an dem Formschlusselement 60 gelangen. Danach sind die beiden Gehäuseteile 4, 6 formschlüssig unter Kompression des Dichtelementes gefügt. Die von dem Dichtelement 24 bewirkte Vorspannkraft wird von dem Formschlusselement 60 gehalten. Darüber hinaus wird durch die Halteflächen 58 der hakenförmigen Befestigungsköpfe 54 des Gehäusedeckels 6 verhindert, dass das Formschlusselement 60 in einer Richtung im Wesentlichen rechtwinklig zu der Außenwand 3 beispielsweise in Folge von Vibration herauswandern kann. Die hakenförmigen Befestigungsköpfe 54 halten dementsprechend das Formschlusselement 60 formschlüssig in einer sich quer zu dem länglichen Formschlusselement 60 erstreckenden Richtung und verhindert ein Abgleiten des Formschlusselementes 60 von den Anlageflächen 50.

Bei dem gezeigten Ausführungsbeispiel sind an beiden Längsseiten identische Ausgestaltungen zur Aufnahme und Halterung des Formschlusselementes 60 vorgesehen sind.

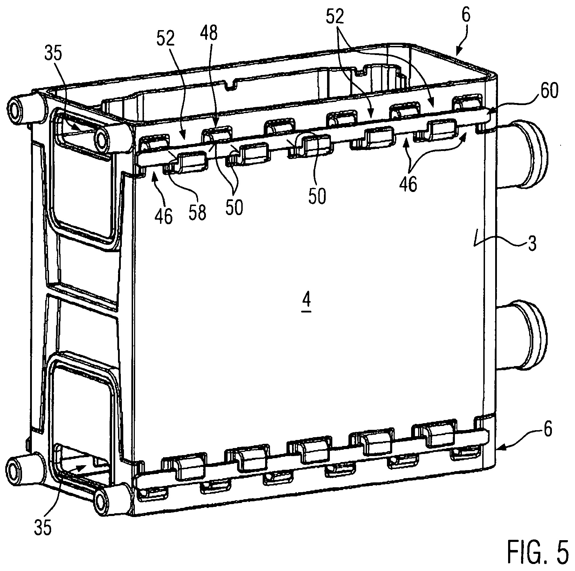

Die Figur 5 zeigt ein gegenüber dem Ausführungsbeispiel nach den Figuren 1 bis 4 leicht abgewandeltes Ausführungsbeispiel. Gleiche Bauteile sind mit gleichen Bezugszeichen gekennzeichnet.

Während bei dem ersten Ausführungsbeispiel das Formschlusselement 60 durch eine zylindrische Stange mit kreisrunden Querschnitt gebildet ist, hat das Formschlusselement 60 nach dem zweiten Ausführungsbeispiel gemäß Figur 5 einen rechteckigen Querschnitt und ist als Rechteckstab vorgesehen. Die hakenförmigen Befestigungsköpfe 54 des Gehäusedeckels 6 sind entsprechend abgewinkelt ausgebildet, so dass die Haltefläche 58 streng rechtwinklig zu der zugeordneten Anlagefläche 50 verläuft. Die Befestigungsköpfe 48 des Gehäuseunterteils 4 ragen im Wesentlichen mit einer sich rechtwinklig zu der Außenwand 3 erstreckenden Anlagefläche 50 von dem zugeordneten Befestigungsabschnitt 46 des Gehäuseunterteils 4 ab.

Wie bei dem ersten Ausführungsbeispiel, so ist auch bei dem zweiten Ausführungsbeispiel das Formschlusselement 60 endseitig an beiden Seiten leicht konisch angefast, wodurch das Einführen des Formschlusselements 60 zwischen die einander gegenüberliegenden Anlageflächen 50 erleichtert wird.

Bei beiden Ausführungsbeispielen liegt das Formschlusselement zwischen der Außenwand 3, welche hier durch die Befestigungsabschnitte 46 bzw. 52 fortgesetzt wird und den Halteflächen 48 formschlüssig fest, die Anlagenflächen 50 verhindern eine Bewegung rechtwinklig hierzu. Nicht gezeigte endseitige Anschläge können nach der Montage montiert werden bzw. zumindest einseitig fest an dem Gehäuseunterteil 4 bzw. dem Gehäusedeckel 6 vorgesehen sein, um eine Längsverschiebung des Formschlusselementes 60 zu verhindern. Ebenso gut kann das Formschlusselement 60 eine Aussparung aufweisen, die mit einem Vorsprung zusammenwirkt, der beispielsweise von der Anlagefläche 50 eines einzigen Befestigungskopfes 48 bzw. 54 abragt, um das Formschlusselement 60 auch in seiner Haupterstreckungsrichtung formschlüssig zu halten und ein Verrutschen bei Vibration unter Nutzungsbedingungen in dem Kraftfahrzeug zu verhindern.

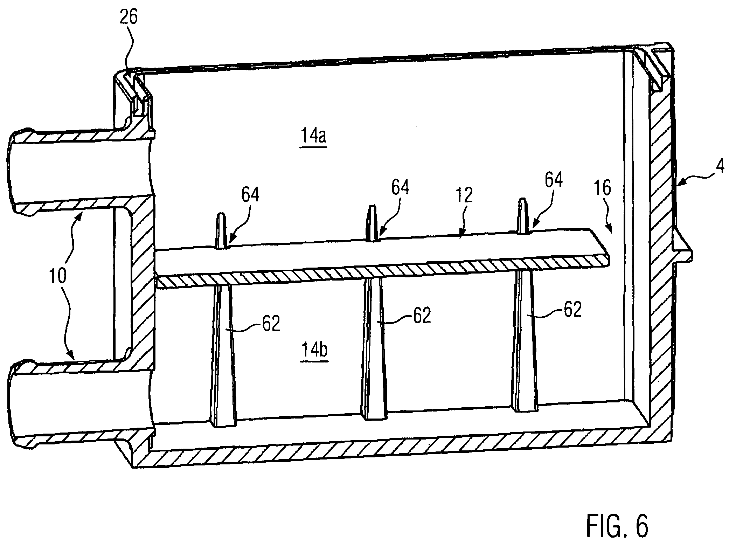

Die Figur 6 zeigt ein Ausführungsbeispiel eines Gehäuseunterteils 4 mit einer zunächst separat hergestellten Trennwand 12. Das Gehäuseunterteil 4 weist in die Zirkulationskammer 14a, 14b hineinragende und von einer Längswand innen abragende konisch zulaufende Auflagerippen 62 auf. Diesen zugeordnet weist die Trennwand 12 Aussparungen 64 auf. Die von oben in das Gehäuseunterteil 4 eingesetzte Trennwand 12 gleitet zunächst über die konischen Auflagerippen 62 ab, wobei aufgrund der Konizität der Auflagerippen 62 ein weiteres Abgleiten der Trennwand 12 verhindert wird. So werden innerhalb des Gehäuseunterteils 4 auf einfache Weise die beiden Zirkulationskammern 14a, 14b abgeteilt. Auf eine vollständige Dichtigkeit zwischen den beiden Kammern kommt es nicht an.

Die zuvor beschriebenen Ausführungsbeispiele nach den Figuren 1 bis 5 beruhen jeweils auf dem Prinzip, dass die Befestigungsabschnitte 46 und 52 jeweils alternierend in Längsrichtung des Formschlusselementes 60 vorgesehen sind und ineinander greifen. Zwischen benachbarten Befestigungsabschnitten 46 des Gehäuseunterteils 4 greifen jeweils benachbarte Befestigungsabschnitte 52 des Gehäusedeckels 6 ein. Die Gehäusedeckel 6 sind identisch. Das Formschlusselement 60 ist im Grunde als unspezifischer zylindrischer Körper ausgebildet und wird über die gesamte Längserstreckung der Außenwand 3 des Gehäuseunterteils eingeschoben. Das Formschlusselement 60 befindet sich in etwa auf Höhe des Dichtelementes 24.

Das Füllvolumen der Zirkulationskammer bei Wasserheizern der zuvor beschriebenen Art liegt zwischen 450 ml und 200 ml, bevorzugt zwischen 400 ml und 220 ml und besonders bevorzugt zwischen 300 ml und 230 ml. Dieses Füllvolumen umfasst auch das Füllvolumen des Stutzens. Jeder Stutzen für sich hat ein Füllvolumen von etwa 7 ml. Das gezeigte Ausführungsbeispiel ist üblicherweise in einem Kühlwasserkreislauf in einem Fahrzeug integriert, der ein Volumen von etwa 5 bis 6 Litern hat. In diesen Kühlwasserkreislauf kann zumindest ein Wärmetauscher für die Erwärmung von Luft in der Fahrgastzelle integriert sein. Ergänzend oder alternativ kann auch der Kühlwasserkreislauf Wärmetauscherflächen zu technischen Komponenten eines Elektrofahrzeuges haben, um diese bei kalten Umgebungstemperaturen auf die notwendige Betriebstemperatur zu bringen.

Insbesondere dient die elektrische Heizvorrichtung jedenfalls auch der Erwärmung einer Batterie in einem Kraftfahrzeug, welches ausschließlich elektrisch angetrieben werden kann. Der Heizer kann auch so geschaltet sein, dass er sich als Standheizung betreiben lässt, um die Fahrgastzelle vor Inbetriebnahme des Fahrzeugs auf eine für den Benutzer angenehme Temperatur zu erwärmen. Dies erfolgt durch Heizen des flüssigen Fluids, das über einen Wärmetauscher geführt wird, welcher von einem in dem Fahrzeug integrierten Gebläse angestrahlt wird, so dass durch den Wärmetauscher hindurchgeleitete Luft sich an dem Wärmetauscher erwärmt und in die Fahrgastzelle eingeleitet wird.

Die Wärmeleistung des elektrischen Zusatzheizers beträgt dabei zwischen 5,0 und 8,0 kW, bevorzugt zwischen 7,0 und 8,0 kW. Diese Heizleistung wird mit einer Ausgestaltung verwirklicht, bei welcher in jeder einzelnen U-förmigen Ausnehmung 24 ein einziges elektrisches Heizelement 22 vorgesehen ist und insgesamt zwischen 9 und 16, bevorzugt zwischen 10 und 14 U-förmige Ausnehmungen in die Zirkulationskammer 14b zwischen 8 und 16, bevorzugt zwischen 10 und 14 Heizrippen 18 hineinragen, die jeweils ein elektrisches Heizelement 22 aufweisen. Die Flächenleistungsdichte liegt zwischen 25 und 27 W/cm².

In jede der U-förmigen Ausnehmungen 20 ist bei dem gezeigten Ausführungsbeispiel das PTC-Heizelement 22 eingesetzt, welches insbesondere in der EP 1 872 986 A1 bzw. EP 1 921 896 A1 beschriebenen Weise ausgestaltet und in der beispielsweise in EP 2 440 004 A1 bzw. EP 1 931 176 A1 beschriebenen Weise in der U-förmigen Ausnehmung 20 aufgenommen und dort Wärme leitend an die zugeordnete Heizrippe 18 anliegt. Insofern wird die Offenbarung der zuvor genannten Offenlegungsschriften der vorliegenden Anmelderin durch Verweis in die den Offenbarungsgehalt der vorliegenden Anmeldung aufgenommen. Sämtliche dort beschriebenen Details der elektrischen Heizelemente 22 sind erfindungswesentlich für das hier diskutierte Ausführungsbeispiel. Dies gilt nicht nur für die Anordnung der Heizelemente 22 in den Ausnehmungen 20 und den Wärme leitenden Kontakt zwischen den Heizelementen 22 und den Innenflächen der Heizrippe 18, sondern auch für den elektrischen Anschluss der einzelnen Heizelemente 22 über ihre Kontaktzungen in der Anschlusskammer 30.

### Bezugszeichenliste

- 2: Gehäuse
- 3: Außenwand
- 4: Gehäuseunterteil
- 6: Gehäusedeckel
- 8: erste Stirnseite
- 10: Anschlussstutzen
- 12: Trennwand
- 14a: Zirkulationskammer
- 14b: Zirkulationskammer
- 16: Strömungsdurchgang
- 18: Heizrippe
- 20: U-förmige Ausnehmung
- 22: PTC-Heizelement
- 24: Dichtelement
- 26: Nut
- 27: Fuge
- 28: Trennwand
- 30: Anschlusskammer
- 32: zweite Stirnseite
- 34: Steuergehäuse
- 35: Öffnung
- 36: Anlageschenkel
- 38: Leistungstransistor
- 40: Leiterplatte
- 42: Rand
- 46: Befestigungsabschnitt Gehäuseunterteil
- 48: Befestigungskopf
- 50: Anlagefläche
- 52: Befestigungsabschnitt Gehäusedeckel
- 54: hakenförmiger Befestigungskopf
- 56: Verriegelungszapfen
- 58: Haltefläche
- 60: Formschlusselement
- 62: Auflagerippen
- 64: Aussparung

## Patentansprüche

1. Wasserheizer mit einem Gehäuse (2), das Rohranschlüsse (10) für den Anschluss von Wasser führenden Rohren aufweist und eine Zirkulationskammer (14a, 14b) umschließt, in welche wenigstens eine mit einem elektrischen Heizelement (22) versehene Heizrippe (18) hineinragt,
**dadurch gekennzeichnet, dass** die Zirkulationskammer (14a, 14b) von einem aus Kunststoff gebildeten wannenförmigen Gehäuseunterteil (4) umgeben ist, das durch einen die Heizrippe (18) ausbildenden Gehäusedeckel (6) aus einem gut Wärme leitenden Werkstoff abgedeckt ist, wobei der Gehäusedeckel ein Druckguss- oder Kunststoffteil ist, welches die Trennwand und die Heizrippe einteilig ausformt, wobei das Kunststoffteil aus einem mit gut wärmeleitendem Füllstoff gefüllten Kunststoff gebildet ist.

2. Wasserheizer nach Anspruch 1, **dadurch gekennzeichnet, dass** der Gehäusedeckel (6) eine Trennwand (28), die die Zirkulationskammer (14a, 14b) von einer Anschlusskammer (30) trennt, zu der sich eine in der Heizrippe (18) ausgesparte U-förmige Ausnehmung (20) öffnet, in der wenigstens ein PTC-Heizelement (22) aufgenommen ist und
einen die Trennwand (28) überragenden und die Anschlusskammer (30) umfänglich umgebenden Rand (42) umfasst, und
dass auf dem Rand (42) ein die Anschlusskammer (30) abdeckender Anschlusskammerdeckel aufliegt.

3. Wasserheizer nach Anspruch 1 oder 2, **dadurch gekennzeichnet, dass** der umlaufende Rand (42) und der Anschlusskammerdeckel aus einem metallischen Werkstoff gebildet sind.

4. Wasserheizer nach einem der vorherigen Ansprüche, **dadurch gekennzeichnet, dass** der Gehäusedeckel (6) ein Druckgussteil ist, welches die Trennwand (28), die Heizrippe (18) und den umlaufenden Rand (42) einteilig ausformt.

5. Wasserheizer nach einem der vorherigen Ansprüche, **dadurch gekennzeichnet, dass** das Gehäuseunterteil (4) ein Kunststoffspritzgussteil ist.

6. Wasserheiter nach einem der vorherigen Ansprüche, **dadurch gekennzeichnet, dass** das Gehäuseunterteil (4) unter Zwischenlage eines Dichtelementes (24) an dem Gehäusedeckel (6) anliegt und dass das Gehäuseunterteil (4) über eine das Dichtelement (24) formschlüssig unter Vorspannung haltende Formschlussverbindung mit dem Gehäusedeckel (6) verbunden ist.

7. Wasserheizer nach einem der vorherigen Ansprüche, **gekennzeichnet durch** ein längliches, das Gehäuseunterteil (4) und den Gehäusedeckel (6) formschlüssig miteinander verbindendes Formschlusselement (60, 70, 90), das zwischen einander gegenüberliegenden Anlageflächen (50) von Gehäuseunterteil (4) und einem Gehäusedeckel (6) vorgesehen ist und an den Anlageflächen (50) unter einer **durch** Kompression des Dichtelementes (24) bewirkten Vorspannkraft anliegt.

8. Wasserheizer nach einem der vorherigen Ansprüche, **dadurch gekennzeichnet, dass** das längliche Formschlusselement (60, 70, 90) durch sich quer zu dem länglichen Formschlusselement (60, 70, 90) erstreckende, von den Anlageflächen (50) des Gehäuseunterteils (4) bzw. des Gehäusedeckels (6) vorspringende Halteflächen (58) formschlüssig gehalten ist.

9. Wasserheizer nach Anspruch 7 oder 8, **dadurch gekennzeichnet, dass** längliche Formschlusselement (60, 70, 90) in seiner Längsrichtung formschlüssig gehalten ist.

10. Wasserheizer nach einem der Ansprüche 7 bis 9, **dadurch gekennzeichnet, dass** das Gehäuseunterteil (4) und der Gehäusedeckel (6) ineinandergreifende Befestigungsabschnitte (46, 52) aufweisen, die in Erstreckungsrichtung des länglichen Formschlusselementes (60) alternierend und hintereinander vorgesehen sind und die Anlageflächen (50) ausbilden.

11. Wasserheizer nach Anspruch 10, **dadurch gekennzeichnet, dass** die Befestigungsabschnitte (46, 52) von einer Außenfläche (3) des Gehäuses (2) abragende Befestigungsköpfe (48, 54) aufweisen, die die Anlageflächen (50) ausbilden und dass die Befestigungsköpfe (48, 54) hakenförmig ausgebildet sind, wobei der an dem Gehäuseunterteil (4) vorgesehene Befestigungskopf (48) einen die Anlagefläche (50) überragenden und in Richtung auf das Gehäuseunterteil (4) vorspringenden Verriegelungszapfen (56) und/oder der an dem Gehäusedeckel (6) vorgesehene Befestigungskopf (54) einen die Anlagefläche (50) überragenden und in Richtung auf den Gehäusedeckel (6) vorspringenden Verriegelungszapfen (56) aufweist.

12. Wasserheizer nach einem der Ansprüche 7 bis 11, **dadurch gekennzeichnet, dass** das längliche Formschlusselement (60, 70, 90) sich parallel zu der Außenfläche (3) des Gehäuses (2) erstreckt.

13. Wasserheizer nach einem der Ansprüche 7 bis 12, **dadurch gekennzeichnet, dass** das längliche Formschlusselement (60, 70, 90) an der Außenfläche (3) des Gehäuses (2) anliegt. 14. Heizsystem für ein elektrisch zu betreibendes Fahrzeug mit einem Antriebsmotor und einer den Antriebsmotor speisenden Batterie sowie einem Wärmetauscher zum Tauschen von Wärme zwischen der Batterie und einem Flüssigkeitskreislauf, in den ein Wasserheizer nach einem der vorherigen Ansprüche geschaltet ist.

14. Heizsystem für ein elektrisch zu betreibendes Fahrzeug mit einem Antriebsmotor und einer den Antriebsmotor speisenden Batterie sowie einem Wärmetauscher zum Tauschen von Wärme zwischen der Batterie und einem Flüssigkeitskreislauf, in den ein Wasserheizer nach einem der vorherigen Ansprüche geschaltet ist.

## Claims

1. A water heater with a housing (2) having pipe connections (10) for connecting water-carrying pipes thereto and enclosing a circulation chamber (14a, 14b) into which at least one radiator (18) provided with an electric heating element (22) projects,
**characterized in that** the circulation chamber (14a, 14b) is enclosed by a housing lower part (4) made of plastic, which is covered by a housing cover (6) defining the radiator (18) and made of a highly heat-conductive material, wherein the housing cover (6) is a pressure die casting or a plastic part, which integrally forms the partition (28) and the radiator (18), weherein the plastic part is made of a plastic with highly heat-conductive filler material.

2. The water heater according to claim 1, **characterized in that** the housing cover (6) comprises a partition (28) separating the circulation chamber (14a, 14b) from a connection chamber (30) towards which a U-shaped opening (20) formed in the radiator (18) and accommodating therein at least one PTC heating element (22) opens, and an edge (42) projecting beyond the partition (28) and circumferentially enclosing the connection chamber (30), and
that the connection chamber cover covering the connection chamber (30) rests on said edge (42).

3. The water heater according to claim 1 or 2, **characterized in that** the circumferentially extending edge (42) and the connection chamber cover are made of a metallic material.

4. The water heater according to any of the preceding claims, **characterized in that** the housing cover (6) is a pressure die casting part, which integrally forms the partition (28), the radiator (18) and the circumferential the extending edge (42).

5. The water heater according to any of the preceding claims, **characterized in that** the housing lower part (4) is a plastic injection molded part.

6. The water heater according to any of the preceding claims, **characterized in that** the housing lower part (4) abuts on the housing cover (6) with an intermediate sealing element (24) extending therebetween and that the housing lower part (4) is connected to the housing cover (6) via a form fit connection maintaining the sealing element (24) under pretension in a form fit manner.

7. The water heater according to any of the preceding claims, **characterized by** an elongate positive locking element (60, 70, 90), which interconnects the housing lower part (4) and the housing cover (6) in a form fit manner and which is provided between opposed contact surfaces (50) of the housing lower part (4) and a housing cover (6) and abuts on the contact surfaces (50) under a pretensioning force caused by compression of the sealing element (24).

8. The water heater according to any of the preceding claims, **characterized in that** the elongate positive locking element (60, 70, 90) is retained in a form fit manner by retaining surfaces (58) extending transversely to the elongate positive locking element (60, 70, 90) and projecting from the contact surfaces (50) of the housing lower part (4) and the housing cover (6), respectively.

9. The water heater according to claim 7 or 8, **characterized in that** the elongate positive locking element (60, 70, 90) is retained in a form fit manner in its longitudinal direction.

10. The water heater according to claims 7 to 9, **characterized in that** the housing lower part (4) and the housing cover (6) are provided with interengaging fastening sections (46, 52), which are provided alternately and in succession in the direction of extension of the elongate positive locking element (60) and which define the contact surfaces (50).

11. The water heater according to claim 10, **characterized in that** the fastening sections (46, 52) comprise fastening heads (48, 54) projecting from an outer surface (3) of the housing (2) and defining the contact surfaces (50), and that the fastening heads (48, 54) are hook-shaped, wherein the fastening head (48) provided on the housing lower part (4) comprises a locking pin (56), which projects beyond the contact surface (50) and protrudes in the direction of the housing lower part (4), and/or the fastening head (54) provided on the housing cover (6) comprises a locking pin (56), which projects beyond the contact surface (50) and protrudes in the direction of the housing cover (6).

12. The water heater according to claim 7 to 11, **characterized in that** the elongate positive locking element (60, 70, 90) extends parallel to the outer surface (3) of the housing (2).

13. The water heater according to claim 7 to 12, **characterized in that** the elongate positive locking element (60, 70, 90) abuts on the outer surface (3) of the housing (2).

14. A heating system for an electrically operable vehicle comprising a drive motor and a battery supplying the drive motor as well as a heat exchanger for exchanging heat between the battery and a fluid circuit, a water heater according to one of the preceding claims being connected in said fluid circuit.

## Revendications

1. CYiauffe-eau comprenant un carter (2), qui comporte des raccords de tube (10) pour le raccordement de tubes conduisant de l'eau, et enferme une chambre de circulation (14a, 14b) dans laquelle s'engage au moins une ailette de chauffage (18) dotée d'un élément chauffant électrique (22),
**caractérisé en ce que** la chambre de circulation (14a, 14b) est entourée d'une partie inférieure de carter (4) en forme de cuvette réalisée en matière plastique, qui est recouverte par un couvercle de carter (6) en un matériau bon conducteur de la chaleur et formant l'ailette de chauffage (18), le couvercle de carter étant une pièce moulée sous pression ou une pièce de matière plastique, qui forme d'un seul tenant la paroi de séparation et l'ailette de chauffage, la pièce de matière plastique étant réalisée par une matière plastique chargée d'une substance de charge conduisant bien la chaleur.

2. Chauffe-eau selon la revendication 1, **caractérisé en ce que** le couvercle de carter (6) comprend une paroi de séparation (28), qui sépare la chambre de circulation (14a, 14b) d'un compartiment de raccordement (30) vers lequel s'ouvre un évidement (20) en forme de U évidé dans l'ailette de chauffage (18) et dans lequel est logé au moins un élément chauffant (22) du type PTC (à coefficient de température positif), ainsi qu'une bordure (42) dépassant de la paroi de séparation (28) et entourant de manière périphérique le compartiment de raccordement (30), et
**en ce que** sur la bordure (42) s'appuie un couvercle de compartiment de raccordement recouvrant le compartiment de raccordement (30).

3. Chauffe-eau selon la revendication 1 ou la revendication 2, **caractérisé en ce que** la bordure périphérique (42) et le couvercle de compartiment de raccordement sont réalisés en un matériau métallique.

4. Chauffe-eau selon l'une des revendications précédentes, **caractérisé en ce que** le couvercle de carter (6) est une pièce moulée sous pression, qui forme d'un seul tenant la paroi de séparation (28), l'ailette de chauffage (18) et la bordure périphérique (42).

5. Chauffe-eau selon l'une des revendications précédentes, **caractérisé en ce que** la partie inférieure de carter (4) est une pièce de matière plastique moulée par injection.

6. Chauffe-eau selon l'une des revendications précédentes, **caractérisé en ce que** la partie inférieure de carter (4) s'appuie contre le couvercle de carter (6) avec interposition d'un élément d'étanchéité (24), et **en ce que** la partie inférieure de carter (4) est reliée au couvercle de carter (6) par l'intermédiaire d'une liaison par complémentarité de formes maintenant l'élément d'étanchéité (24) sous précontrainte par complémentarité de formes.

7. Chauffe-eau selon l'une des revendications précédentes, **caractérisé par** un élément de liaison par complémentarité de formes (60, 70, 90) allongé, qui relie l'un à l'autre par complémentarité de formes, la partie inférieure de carter (4) et le couvercle de carter (6), et qui est prévu entre des surfaces d'appui (50) opposées de la partie inférieure de carter (4) et d'un couvercle de carter (6), et s'appuie contre lesdites surfaces d'appui (50) sous l'effet d'une force de précontrainte produite par la compression de l'élément d'étanchéité (24).

8. Chauffe-eau selon l'une des revendications précédentes, **caractérisé en ce que** l'élément de liaison par complémentarité de formes (60, 70, 90) allongé est maintenu par complémentarité de formes par des surfaces de maintien (58), qui s'étendent transversalement par rapport à l'élément de liaison par complémentarité de formes (60, 70, 90) allongé et font saillie des surfaces d'appui (50) de la partie inférieure de carter (4) et respectivement du couvercle de carter (6).

9. Chauffe-eau selon la revendication 7 ou la revendication 8, **caractérisé en ce que** l'élément de liaison par complémentarité de formes (60, 70, 90) allongé est maintenu par complémentarité de formes dans sa direction longitudinale.

10. Chauffe-eau selon l'une des revendications 7 à 9, **caractérisé en ce que** la partie inférieure de carter (4) et le couvercle de carter (6) présentent des tronçons de fixation (46, 52) s'engageant les uns dans les autres, qui sont prévus de manière alternée et les uns à la suite des autres dans la direction où s'étend l'élément de liaison par complémentarité de formes (60) allongé, et forment les surfaces d'appui (50).

11. Chauffe-eau selon la revendication 10, **caractérisé en ce que** les tronçons de fixation (46, 52) présentent des têtes de fixation (48, 54), qui font saillie d'une surface extérieure (3) du carter (2) et forment les surfaces d'appui (50), et **en ce que** les têtes de fixation (48, 54) sont d'une configuration en forme de crochet, la tête de fixation (48) prévue sur la partie inférieure de carter (4) présentant un talon de verrouillage (56), qui dépasse de la surface d'appui (50) et fait saillie en direction de la partie inférieure de carter (4), et/ou la tête de fixation (54) prévue sur le couvercle de carter (6) présentant un talon de verrouillage (56), qui dépasse de la surface d'appui (50) et fait saillie en direction du couvercle de carter (6).

12. Chauffe-eau selon l'une des revendications 7 à 11, **caractérisé en ce que** l'élément de liaison par complémentarité de formes (60, 70, 90) allongé s'étend parallèlement à la surface extérieure (3) du carter (2).

13. Chauffe-eau selon l'une des revendications 7 à 12, **caractérisé en ce que** l'élément de liaison par complémentarité de formes (60, 70, 90) allongé s'appuie sur la surface extérieure (3) du carter (2).

14. Système de chauffage pour un véhicule à fonctionnement électrique avec un moteur d'entrainement et une batterie alimentant le moteur d'entraînement, ainsi qu'un échangeur de chaleur pour échanger de la chaleur entre la batterie et un circuit de liquide en circulation, dans lequel est monté un chauffe-eau selon l'une des revendications précédentes.
